Europäisches Patentamt

European Patent Office

Office européen des brevets

(19)

(11) Numéro de publication: **0 300 565**
**A1**

(12) **DEMANDE DE BREVET EUROPEEN**

(21) Numéro de dépôt: 88201510.0

(51) Int. Cl.⁴: **H04N 7/08**

(22) Date de dépôt: 14.07.88

(30) Priorité: 24.07.87 FR 8710580

(43) Date de publication de la demande:
**25.01.89 Bulletin 89/04**

(84) Etats contractants désignés:
**AT BE DE ES FR GB IT NL SE**

(71) Demandeur: **Laboratoires d'Electronique et
de Physique Appliquée L.E.P.
3, Avenue Descartes
F-94450 Limeil-Brévannes(FR)**

(84) **FR**

(71) Demandeur: **N.V. Philips'
Gloeilampenfabrieken
Groenewoudseweg 1
NL-5621 BA Eindhoven(NL)**

(84) **BE DE ES GB IT NL SE AT**

(72) Inventeur: **Salembier, Philippe Société Civile
S.P.I.D.
209, rue de l'Université
F-75007 Paris(FR)**
Inventeur: **Lamnabhi, Moustanir Société Civile
S.P.I.D.
209, rue de l'Université
F-75007 Paris(FR)**

(74) Mandataire: **Landousy, Christian et al
Société Civile S.P.I.D. 209, Rue de
l'Université
F-75007 Paris(FR)**

(54) **Dispositif de décodage de signaux lors de transmissions en modulation de fréquence.**

(57) Dispositif de décodage de signaux à codage numérique modulés en fréquence comprenant notamment un démodulateur de fréquence, ainsi qu'un étage de détection de clics (300) comprenant un circuit de détection (310) et un circuit de comparaison (320), un circuit de decision (330), un circuit de génération d'impulsions, et un circuit de correction (340) prévu pour éliminer les effets perturbateurs de chaque clic. Le circuit de détection (310) comprend un filtre linéaire dont la fonction de transfert est du type :

$$H(f) = \frac{DESAC^*(f) \cdot CLIC(f)}{DESP(num) + DESP'(BC)}$$

expression dans laquelle f est la fréquence, DESAC*(f) la fonction de transfert conjuguée du filtre de désaccentuation, CLIC(f) le spectre modélisant un clic, DESP(num) la densité spectrale de puissance du signal, et DESP(BC) la densité spectrale de puissance du bruit continu. Le circuit de décision (330) détermine la position temporelle et la polarité de chaque clic (bruit impulsionnel). Application : récepteurs

EP 0 300 565 A1

de télévision et récepteurs de signaux (type D2-MAC) transmis en modulation de fréquence.

FIG. 3

## Dispositif de décodage de signaux lors de transmissions en modulation de fréquence

La présente invention concerne un dispositif de décodage de signaux à codage numérique modulés en fréquence comprenant notamment un démodulateur de fréquence, ainsi que :

(a) en sortie du démodulateur de fréquence, un étage de détection de clics, lesdits clics étant des signaux impulsionnels, et ledit étage de détection comprenant lui-même un circuit de détection et un circuit de comparaison ;

(b) en sortie dudit étage de détection, un circuit de génération d'impulsions ;

(c) en sortie dudit circuit de génération d'impulsions, un circuit de correction prévu pour éliminer les effets perturbateurs de chaque clic ;

Lors d'une transmission en modulation de fréquence, l'étude du signal après démodulation révèle l'existence d'un seuil de fonctionnement. Défini en terme de rapport porteuse/bruit, ce seuil est généralement voisin de C/N = 10 dB. On peut considérer que, lorsque ce rapport est supérieur à la limite ci- dessus, la perturbation qui affecte le signal de sortie du démodulateur de fréquence est uniquement constituée d'un bruit continu, dont la densité spectrale de puissance est sensiblement proportionnelle au carré de la fréquence si l'on néglige l'éventuelle fonction de désaccentuation.

Par contre, lorsque ce seuil n'est pas atteint, le signal original restitué est perturbé non seulement comme précédemment par le bruit continu, mais aussi par un bruit de type impulsionnel. Cet autre type de perturbation, constitué de signaux appelés clics, est caractérisé par l'apparition d'impulsions très brèves mais de grande énergie, d'amplitude aléatoire et de position temporelle également aléatoire. La fréquence d'apparition de ces impulsions est d'autant plus grande que ledit rapport porteuse/bruit C/N est faible.

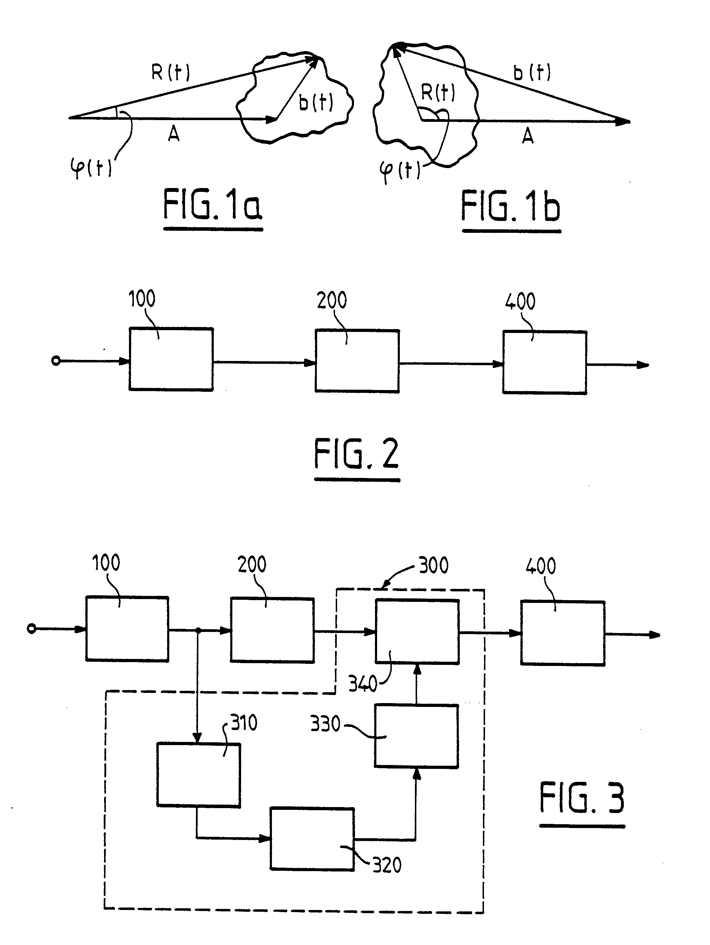

L'interprétation de la présence de ces clics est approximativement la suivante, en référence aux figures 1a et 1b. En supposant que le signal modulant est nul, la porteuse A est fixe, et le vecteur bruit b(t) tourne aléatoirement autour de l'extrémité de la porteuse, comme le montre la figure 1a. Le démodulateur de fréquence fournit en réalité, en sortie, un signal proportionnel à la dérivée de l'angle $\phi(t)$, si l'on ne tient pas compte de la désaccentuation. Donc, si le rapport porteuse/bruit à l'entrée du récepteur est grand comme dans le cas de la figure 1a, l'amplitude du bruit est faible devant celle de la porteuse, et l'angle $\phi(t)$ fluctue autour d'une valeur moyenne nulle. Le signal de sortie $d\phi(t)/dt$ du démodulateur présente alors lui-même de faibles variations autour de la valeur 0.

Mais si la puissance du bruit augmente, l'amplitude du vecteur bruit peut atteindre ou même dépasser à certains moments celle de la porteuse. Dans cette situation, représentée sur la figure 1b, le vecteur résultant $\overline{R(t)} = \overline{A} + \overline{b(t)}$ peut tourner autour de l'origine. Dans ces conditions, l'angle $\phi(t)$ varie brusquement de $\pm 2\pi$ et le signal de sortie proportionnel à $d\phi/dt$ est alors constitué d'une impulsion brève mais de très grande amplitude, appelée clic comme on l'a vu plus haut. Ce type de bruit s'éloigne fortement du modèle de bruit blanc.

Si les signaux qui font l'objet de la transmission sont codés en numérique, il faut naturellement utiliser à la réception un décodeur numérique à la suite du démodulateur de fréquence. Lorsqu'apparaissent, de façon aléatoire, les clics, ceux-ci peuvent faire passer le signal du niveau où il se trouve à un autre niveau du code, et ils introduisent alors des erreurs lors du décodage. Plus le rapport porteuse/bruit est faible, plus les clics sont nombreux, et plus fréquentes sont ces erreurs de décodage.

Il est donc indéniable que les décodeurs classiques, qu'il s'agisse par exemple de décodeurs à seuil ou, plus récemment, de décodeurs à maximum de vraisemblance, sont davantage prévus pour fonctionner dans un environnement où le bruit est blanc, additif et gaussien que dans le cas de transmissions en modulation de fréquence, surtout à faible niveau de la porteuse. Les essais entrepris dans le cas d'une transmission par satellite d'un signal de télévision selon la norme D2-MAC/paquets confirment ce constat. Dans un tel signal, la partie son est, en effet, numérique et codée en duobinaire, et la transmission par satellite utilise une modulation de fréquence. L'étude précise des erreurs faites par l'un ou l'autre type de décodeur dans le cas de cette application confirme que ces deux décodeurs font presque systématiquement une erreur de décodage lorsqu'un clic se produit, et donc que les performances de ces décodeurs se dégradent lors de transmissions en modulation de fréquence.

Le but de l'invention est de proposer une solution technique permettant d'obtenir de meilleures performances lors de transmissions en modulation de fréquence.

A cet effet, l'invention concerne un dispositif tel que défini dans le préambule de la description et caractérisé en ce que le circuit de détection comprend un filtre linéaire dont la fonction de transfert est du type :

$$H(f) = \frac{DESAC^*(f) \cdot CLIC(f)}{DESP(num) + DESP\ (BC)}$$

expression dans laquelle f est la fréquence, DESAC'(f) la fonction de transfert conjuguée du filtre de désaccentuation lié à la modulation de fréquence, CLIC(f) le spectre modélisant un clic, DESP(num) la densité spectrale de puissance du signal, et DEPB(BC) la densité spectrale de puissance du bruit continu, en ce que le circuit de comparaison est prévu pour transmettre un signal nul ou la sortie du circuit de détection selon le niveau de cette sortie par rapport à un seuil de référence ; et en ce qu'il est prévu, entre le circuit de comparaison et le circuit de génération d'impulsions un circuit de décision prévu pour déterminer deux informations de position temporelle et de polarité de chaque clic transmises audit circuit de correction.

Les défauts mis en évidence ci-dessus dans une chaîne de transmission avec démodulation de fréquence sont effectivement corrigés à l'aide de la structure ainsi proposée. Cette correction élimine les effets de chaque clic après une détermination de sa position et de son signe (ou polarité). Ceci permet alors de retrancher (en cas de polarité positive, ou d'ajouter au signal perturbé, en cas de polarité négative) du signal perturbé ces signaux perturbateurs. Il faut cependant noter que cette détermination de position et de polarité présente quelques difficultés. D'une part, on observe qu'en réalité à un seul clic correspondent parfois plusieurs détections, très rapprochées dans le temps mais qui introduisent une incertitude supplémentaire quant à la position réelle des signaux perturbateurs. Par ailleurs, on constate également, dans le cas d'un codage numérique des signaux transmis que la correction des symboles numériques dépend de la position temporelle relative du clic et de ces symboles. Les moyens prévus dans la structure de dispositif conforme à l'invention et décrits plus loin de façon détaillée s'avèrent efficaces pour adapter les décodeurs actuellement utilisés aux conditions particulières des transmissions en modulation de fréquence, lorsque de telles transmissions sont réalisées dans des conditions de bruit médiocres ou mauvaises ou avec un niveau de porteuse relativement peu élevé. Plus précisément, l'intérêt de la solution proposée repose entre autres sur la considération qui a conduit à rechercher dans le signal global celle des composantes de ce signal que l'on voulait traiter et à prévoir en conséquence des moyens de détection appropriés, lesdits moyens s'avérant ici être un filtre linéaire, auquel est de préférence associée une fenêtre temporelle délimitant, après la détection, une zone temporelle de validation d'informations de correction.

Le brevet des Etats-Unis d'Amérique US-A-4272846 décrit bien un dispositif de même nature que celui qui fait l'objet de l'invention, en ce sens qu'il est comme lui apte à corriger les effets perturbateurs de signaux impulsionnels par une opération du type addition au signal à corriger d'un signal égal au signal perturbateur mais de phase opposée. Cependant, dans le cas de l'invention, on a constaté, en raison de la nature même des signaux perturbateurs, une incertitude quant à leur position, et les opérations de génération du signal correcteur et de correction proprement dite sont précédées, conformément à l'invention, d'une opération de prise de décision qui permet de lever cette incertitude. Il apparaît donc d'une part que le problème résolu dans le cas de l'invention est plus complexe que celui mentionné dans le document cité, et d'autre part que ce problème est résolu de manière nouvelle, les moyens définis dans le cas de l'invention n'étant pas décrits dans ledit document.

Les particularités et avantages de l'invention apparaîtront maintenant de façon plus détaillée dans la description qui suit et dans les dessins annexés, donnés à titre d'exemples non limitatifs et dans lesquels :

- les figures 1a et 1b montrent de façon simplifiée comment s'opère la composition vectorielle de la porteuse et du bruit perturbateur qui peut affecter une transmission en modulation de fréquence, la figure 1a correspondant au cas où l'amplitude du bruit est relativement faible et la figure 1b à celui où ladite amplitude est au moins du même ordre de grandeur que celle du signal utile ;

- les figures 2 et 3 montrent, respectivement, et de façon schématique, la structure de la partie réception d'une chaîne classique de transmission d'un signal numérique codé et modulé en fréquence, et la structure d'une telle partie réception lorsqu'elle est équipée du dispositif de décodage selon l'invention ;

- la figure 4 montre un exemple de réalisation du circuit de détection du dispositif de décodage de la figure 3, et la figure 5 montre un exemple de réalisation du circuit de comparaison dudit circuit de détection ;

- les figures 6a et 6b montrent deux exemples de réalisation du circuit de décision du dispositif de décodage selon l'invention ;

- les figures 7a à 7c représentent trois exemples de réalisation du circuit de correction de ce dispositif de décodage.

La réception d'un signal numérique modulé en fréquence est réalisée, de façon traditionnelle, selon le processus représenté sur la figure 2. Le signal reçu subit en effet d'abord une démodulation de fréquence, puis un filtrage et un décodage, ici numérique. Le dispositif d'amélioration de décodage représenté sur la figure 3 dans un exemple particulier de réalisation de l'invention comprend, comme dans le cas de la figure 2, un démodulateur de fréquence 100, un filtre 200, et un décodeur numérique 400. Il comprend en outre, selon l'invention, un ensemble de circuits référencé 300 qui va être décrit en détail ci-dessous.

Cet ensemble 300 est placé en parallèle sur le filtre 200, et à ce titre il reçoit en entrée la sortie du démodulateur 100 et sa sortie est envoyée vers le décodeur 400. Plus précisément, l'ensemble 300 comprend un circuit de détection de clics 310, un circuit de comparaison 320, un circuit de décision 330, un circuit de génération d'impulsions, et un circuit de correction.

Le circuit de détection de clics 310 est ici un filtre. On a vu en effet que, lorsqu'on travaille au-dessous du seuil de démodulation, la sortie du démodulateur 100 est constituée de trois signaux, à savoir le signal démodulé, un bruit continu, et des clics. Si l'on veut détecter ce troisième type de signal, on va considérer que ces clics forment justement le signal utile, et que le signal numérique et le bruit continu sont les signaux perturbateurs bruitant la détection de ces clics. La théorie linéaire de la détection optimale d'un signal (ici, un clic) dans un bruit (ici, le signal numérique et le bruit continu) montre que, selon un critère d'optimisation choisi ici comme étant la recherche du rapport maximum des puissances du signal utile et du bruit à l'instant de décision, le meilleur détecteur comprend un filtre linéaire dont la fonction de transfert H(f) peut être exprimée de la façon suivante :

$$H(f) = \frac{DESAC^*(f) \cdot CLIC(f)}{DESP(num) + DESP(BC)}$$

expression dans laquelle DESAC$^*$(f) est la fonction de transfert conjuguée du filtre de désaccentuation lié à la modulation de fréquence, CLIC(f) est le spectre d'un clic (qui dépend du mode de représentation choisi pour le clic, par exemple une fonction de Dirac, ou bien une gaussienne étroite), DESP(num) est la densité spectrale de puissance du signal numérique, BC est le bruit continu, DESP(BC) est la densité spectrale de puissance du bruit continu, et f est la fréquence.

Dans l'hypothèse où chaque clic est modélisé par une fonction de Dirac et où le signal transmis est numérique et codé en duobinaire, le filtre qui permet la détection de ces clics a, dans le cas de la réception de signaux de télévision selon le standard D2-MAC/paquets, pour fonction de transfert ($\alpha$ étant un facteur dépendant entre autres du rapport porteuse sur bruit C/N, et I étant la fonction caractéristique, égale à 1 de 0 à 1/2T, c'est-à-dire de 0 à environ 5 MHz, et égale à zéro au-delà de cette fréquence) :

$$H(f) = \frac{DESAC(f)}{I.\cos^2(\pi fT) + \alpha.|DESAC(f)|^2. f^2}$$

En effet, dans ce cas, la densité spectrale de puissance du signal transmis est proportionnelle à $\cos^2(\pi fT)$, T étant l'inverse du débit des symboles ici égal à 10,125 mégahertz. La fonction de désaccentuation est, elle, définie dans la norme D2-MAC/paquets :
DESAC(f) = $\sqrt{2}$.(1 + jf/f$_1$)/(1 + jf/f$_2$)
avec f$_1$ = 1,5 mégahertz et f$_2$ = 0,84 mégahertz. La réalisation décrite pourrait être analogique ou numérique. Dans l'exemple numérique ici décrit, la fréquence d'échantillonnage f$_e$ est choisie égale à 40,5 mégahertz, c'est-à-dire à 4 fois la fréquence des symboles duobinaires. Ce choix a pour conséquence que l'on sera capable de distinguer un clic tombant soit juste sur un symbole duobinaire, soit juste entre deux symboles successifs, soit encore en l'une des deux positions intermédiaires, à 1/4 ou à 3/4 de la durée entre deux symboles.

La réalisation de ce filtre de détection de clics est ici très simplement effectuée de façon approchée à l'aide d'un filtre à 13 coefficients actifs, coefficients qui sont en outre tous des puissances de 2 si l'on veut éviter des multiplications. Celles-ci sont en effet, à 40,5 mégahertz, réalisables mais coûteuses, et sont avantageusement remplacées par des décalages du nombre de bits approprié. Si les X$_{k\pm i}$ sont les échantillons successifs représentatifs du signal numérique transmis, la sortie de ce filtre à 13 coefficients est donnée par :

$$Y_k = a_0 X_k + a_1(X_{k+1} + X_{k-1}) + a_2(X_{k+2} + X_{k-2}) + a_3(X_{k+3} + X_{k-3}) + a_4(X_{k+4} + X_{k-4}) + a_5(X_{k+6} + X_{k-6}) + a_7(X_{k+7} + X_{k-7})$$

EP 0 300 565 A1

avec le tableau de coefficients suivants : $a_0 = 16$, $a_1 = a_{-1} = 4$, $a_2 = a_{-2} = a_3 = a_{-3} = a_4 = a_{-4} = -4$, $a_5 = a_{-5} = 0$, $a_6 = a_{-6} = 1$, et $a_7 = a_{-7} = 2$.

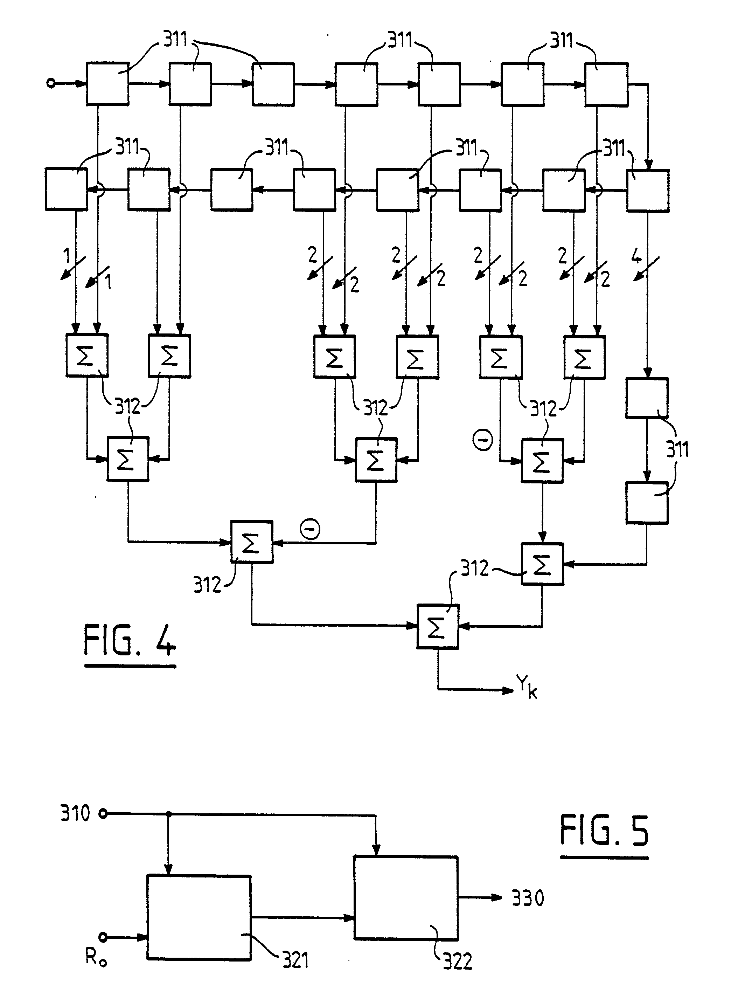

Une réalisation possible de ce filtre est représentée sur la figure 4, qui comprend dix-sept circuits à retard 311 et douze sommateurs 312 dont les entrées sont positives ou négatives (seules les entrées négatives sont expressément représentées selon les signes affectant les coefficients de l'expression de $Y_k$). Toutes les multiplications figurant dans cette expression de $Y_k$ sont réalisées par des décalages de 4 bits pour $a_0$, de 2 bits pour $a_1$ à $a_4$, de 1 bit pour $a_7$. Ces décalages sont schématisés sur la figure 4 par une flèche accompagnée du nombre de bits du décalage.

La sortie du circuit de détection de clics 310 est alors fournie au circuit de comparaison 320, dans lequel la valeur absolue de la sortie du circuit 310 est comparée à un seuil. Si la valeur ainsi présentée est inférieure au seuil, on force la sortie à 0. Si au contraire la valeur est supérieure au seuil, elle est tranférée telle quelle en sortie du circuit de comparaison 320. La valeur du seuil est en général dépendante du rapport porteuse/bruit C/N auquel on travaille.

Une réalisation possible du circuit de comparaison 320 est représentée sur la figure 5, où un comparateur 321 reçoit d'une part la valeur du seuil de référence $R_0$ et d'autre part la sortie du circuit de détection de clics 310, et délivre un signal binaire fourni à une première entrée d'un circuit de commutation 322 constitué d'un ensemble de portes ET logiques. Ce circuit 322 reçoit sur une deuxième entrée la sortie du circuit de détection de clics 310 et délivre un signal de sortie soit égal à 0, comme on l'a vu, lorsque le seuil n'est pas dépassé, soit égal au signal de sortie du circuit de détection de clics 310 lorsque ce signal de sortie est supérieur audit seuil.

La sortie du circuit de comparaison est donc constituée par une série de valeurs qui sont presque toutes nulles, sauf celles qui dépassaient le seuil et qui correspondent à un clic. On constate malheureusement que, pour un seul clic ainsi repéré, il peut se produire plusieurs détections très rapprochées dont l'une seulement a la même position temporelle que le clic associé à ce groupe de détections. Pour déterminer de façon précise cette position temporelle, il faut donc connaître celle de ces détections qui a la valeur absolue maximale.

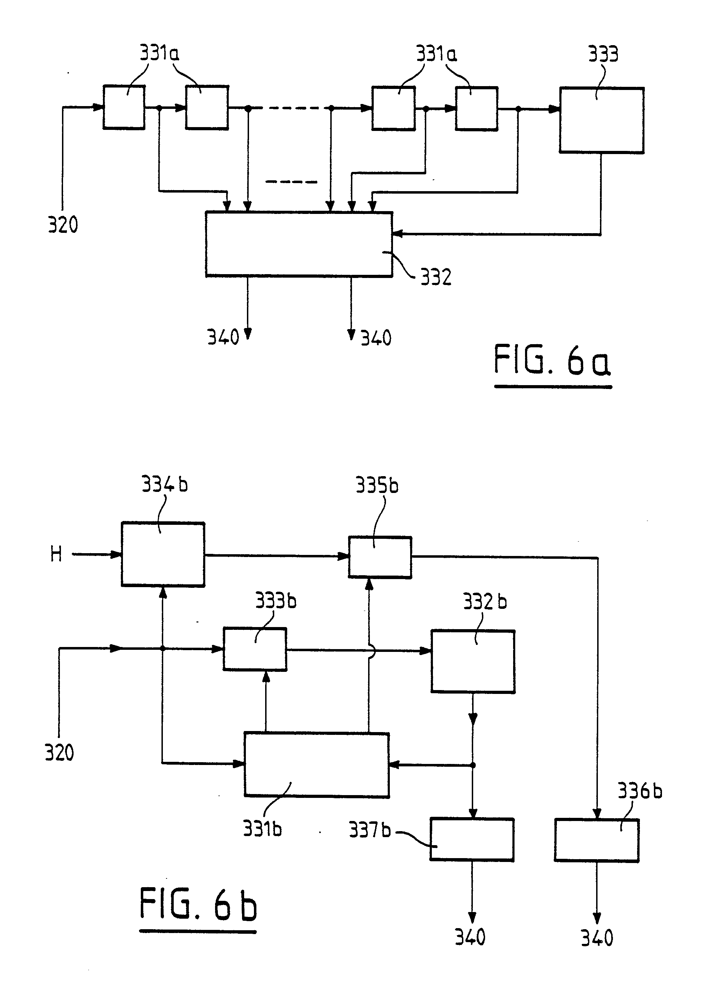

Le circuit de décision 330 représenté sur la figure 6a réalise cette opération. Chaque fois qu'une valeur non nulle est détectée en sortie du circuit de comparaison 320, on ouvre une fenêtre temporelle de largeur L (cette largeur est limitée, sans restreindre significativement les performances dans le cas de la réalisation approchée citée, à celle incluant le lobe central et les deux lobes secondaires de la réponse impulsionnelle du filtre), puis on recherche à l'intérieur de cette fenêtre où se situe la plus grande valeur (si plusieurs valeurs sont détectées). A cette plus grande valeur correspond la position temporelle réelle du clic, position que l'on mémorise en même temps que le signe du clic. La figure 6a montre une série de circuits à retard 331a définissant la longueur L et dont les sorties sont reliées aux entrées d'un comparateur 332a. Un circuit de validation 333a commandé par la première valeur non nulle qui a déclenché l'ouverture de la fenêtre temporelle L, active le fonctionnement du comparateur 332a, qui opère la sélection des deux informations de position temporelle et de polarité du clic de plus grande amplitude détecté à l'intérieur de cette fenêtre.

La figure 6b montre un autre exemple de réalisation du circuit de décision 330. Dans cette variante de réalisation, un comparateur 331b reçoit sur une première entrée la sortie du circuit de comparaison 320 et sur une deuxième entrée la sortie d'un premier registre 332b stockant la valeur maximale parmi les valeurs non nulles de sortie du circuit de comparaison 320. La sortie du comparateur 331b commande l'ouverture ou la fermeture d'un premier interrupteur 333b qui relie ou non, selon sa position, ladite sortie du circuit de comparaison 320 à l'entrée du registre 332b. Le repérage de position de la plus grande valeur détectée à l'intérieur de la fenêtre temporelle est assuré, une fois cette fenêtre ouverte, à l'aide d'un compteur 334b recevant d'une part les signaux de sortie du circuit de comparaison 320, pour ouverture de la fenêtre temporelle, et d'autre part la cadence d'échantillonnage (connexion H). La sortie du comparateur 331b commande également l'ouverture ou la fermeture d'un deuxième interrupteur 335b qui relie ou non, selon sa position, la sortie du compteur 334b à l'entrée d'un deuxième registre 336b stockant la position associée à la valeur maximale stockée dans le premier registre 332b. Un circuit de détermination de signe 337b, prévu en sortie du premier registre 332b de stockage de la valeur maximale, permet de connaître le signe de la valeur maximale stockée. Les deux informations de position temporelle et de polarité du clic détecté sont donc, dans le cas de cette variante de réalisation, disponibles en sortie du deuxième registre 336b et du circuit de détermination de signe 337b respectivement.

Le circuit 340 qui, sur les figures, regroupe ici les fonctions de génération d'impulsions et de correction, reçoit la sortie du circuit de décision 330, c'est-à-dire les deux informations précédentes de position temporelle et de polarité, et est destiné à corriger dans le signal à décoder les effets de la présence des clics, à partir desdites informations. Là encore, et de façon non limitative comme précédemment, divers

6

modes de réalisation peuvent être envisagés.

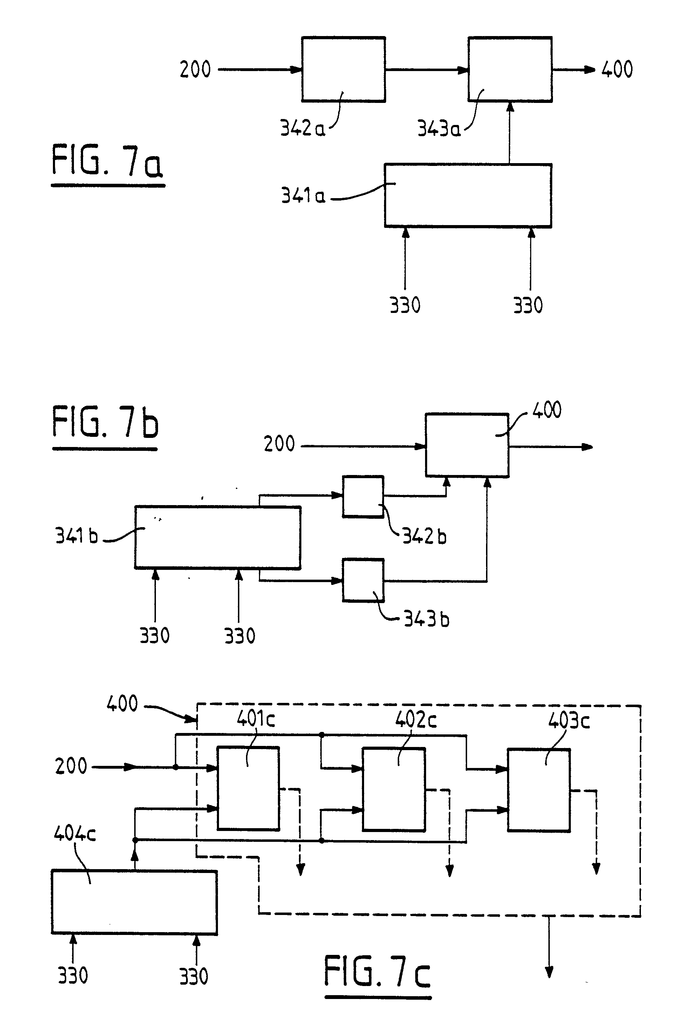

Dans le premier mode de réalisation proposé sur la figure 7a, on soustrait directement du signal d'entrée du décodeur numérique 400 la valeur que le clic lui a ajoutée (ou on lui additionne ce signal en cas de polarité négative). Le circuit de génération d'impulsions comprend à cet effet une mémoire 341a contenant la ou les valeurs à soustraire (à additionner, dans le cas d'une polarité négative). Le circuit de correction comprend un sommateur 343a recevant d'une part, par l'intermédiaire d'un circuit de réalignement temporel 342a, le signal de sortie du filtre 200 (ou du démodulateur de fréquence dans l'hypothèse où ce filtre serait incorporé au démodulateur au lieu de constituer un circuit distinct) et d'autre part la sortie du circuit de génération d'impulsions constitué par la mémoire 341a. La modélisation d'un clic par une fonction de Dirac, bien qu'offrant un bon outil pour la détection de celui-ci, s'avère, on peut le préciser ici, insuffisante pour juger de l'influence de ce clic sur les symboles transmis. En effet, à cause de son étalement temporel, ce clic peut affecter un ou plusieurs symboles transmis, en fonction de son instant d'arrivée. Selon la position du clic par rapport à la position des symboles transmis, il peut donc suffire d'une valeur stockée en mémoire 341a pour permettre la correction ultérieure, ou au contraire plusieurs valeurs sont à extraire de la mémoire 341a. Par exemple, si la position temporelle du clic coïncide avec celle d'un échantillon numérique, seul cet échantillon sera affecté par le clic : il sera donc le seul à subir la correction ultérieure (qui est une soustraction si la polarité du clic est positive, ou qui revient à une addition si cette polarité est négative). Si au contraire il n'y a pas coïncidence temporelle entre le clic et un échantillon, au moins deux échantillons seront affectés par le clic perturbateur et doivent donc être corrigés ultérieurement, à l'aide de plusieurs valeurs extraites de la mémoire 341a.

Dans le deuxième et le troisième mode de réalisation proposés respectivement sur les figures 7b et 7c, on annule cette fois les effets des clics en modifiant un ou des éléments internes au décodeur 400, au lieu d'effectuer une correction externe au décodeur, en amont de celui-ci.

Par exemple, dans le cas d'un décodeur à seuil(s), on annule les effets des clics en modifiant le ou les seuils au moment où un clic se produit. Cette opération est représentée sur la figure 7b qui montre dans le cas d'un décodeur à deux seuils un registre de stockage 341b recevant du circuit de décision 330 les deux informations de position temporelle et de polarité des clics. Les sorties de ce registre 341b sont envoyées vers deux circuits de réglage de seuil 342b et 343b, dont les sorties sont les seuils à fournir au décodeur 400 recevant dans l'exemple décrit une séquence de signaux duobinaires et restituant une séquence de signaux binaires.

Dans le cas d'un décodeur dit de Viterbi, il pourrait être prévu, en tête du décodeur, trois mémoires mortes de type PROM pour recevoir en parallèle les signaux duobinaires se succédant en série en sortie du canal de réception. Ces trois mémoires contiennent alors des probabilités $P(y/0)$, des probabilités $P(y/1)$, et des probabilités $P(y/2)$, qui représentent les probabilités d'avoir reçu effectivement un signal y sachant que l'échantillon duobinaire x réellement émis était respectivement 0, 1, ou 2. Lesdites probabilités sont utilisées (soit telles quelles, soit sous forme logarithmique ce qui simplifie les circuits en permettant le remplacement de multiplieurs par des additionneurs) pour déterminer et reconstruire selon l'algorithme de Viterbi deux chemins binaires ayant les vraisemblances les plus grandes, la comparaison des vraisemblances ainsi estimées conduisant après une dernière décision à la sélection de celui des chemins ainsi reconstruits qui présente le maximum de vraisemblance, et donc à la meilleure séquence estimée des échantillons duobinaires émis compte tenu de la séquence de signaux duobinaires reçue.

Comme ces trois mémoires sont adressées par les signaux qu'elle reçoivent pour délivrer lesdites probabilités conditionnelles correspondantes, on propose d'annuler les effets des clics en modifiant, au moment où un clic se produit, la distribution de ces probabilités élémentaires. Il faut et il suffit, pour cela, de modifier les adresses dans les trois mémoires du décodeur, selon un schéma tel que celui proposé sur la figure 7c, où les mémoires de stockage des probabilités conditionnelles $P(y/0)$, $P(y/1)$, $P(y/2)$ (ou de stockage de leur logarithme selon le mode de réalisation envisagé) sont respectivement référencées 401c, 402c, 403c. Les entrées de ces trois mémoires 401c à 403c reçoivent d'une part, pour leur adressage, la séquence des échantillons numériques successifs, et d'autre part la sortie d'un circuit 404c de modification d'adresses dont les entrées sont constituées par les deux informations de position de clic et de polarité délivrées par le circuit de décision 330. La présence de ce circuit 404c permet de modifier de façon appropriée les adresses de probabilités à l'intérieur desdites mémoires et réalise donc, là encore, l'équivalent des fonctions de génération d'impulsions et de correction souhaitées.

## Revendications

1. Dispositif de décodage de signaux à codage numérique modulés en fréquence comprenant notamment un démodulateur de fréquence, ainsi que :

(a) en sortie du démodulateur de fréquence, un étage de détection de clics, lesdits clics étant des signaux impulsionnels, et ledit étage de détection comprenant lui-même un circuit de détection et un circuit de comparaison ;

(b) en sortie dudit étage de détection, un circuit de génération d'impulsions ;

(c) en sortie dudit circuit de génération d'impulsions, un circuit de correction prévu pour éliminer les effets perturbateurs de chaque clic ;

caractérisé en ce que le circuit de détection comprend un filtre linéaire dont la fonction de transfert est du type :

$$H(f) = \frac{DESAC^{*}(f) \cdot CLIC(f)}{DESP(num) + DESP\ (BC)}$$

expression dans laquelle f est la fréquence, DESAC*(f) la fonction de transfert conjuguée du filtre de désaccentuation lié à la modulation de fréquence, CLIC(f) le spectre modélisant un clic, DESP(num) la densité spectrale de puissance du signal, et DEPB(BC) la densité spectrale de puissance du bruit continu, en ce que le circuit de comparaison est prévu pour transmettre un signal nul ou la sortie du circuit de détection selon le niveau de cette sortie par rapport à un seuil de référence ; et en ce qu'il est prévu, entre le circuit de comparaison et le circuit de génération d'impulsions un circuit de décision prévu pour déterminer deux informations de position temporelle et de polarité de chaque clic transmises audit circuit de correction.

2. Dispositif selon la revendication 1, dans le cas où lesdits signaux numériques sont des signaux de télévision numériques codés selon le standard D2-MAC/paquets, comprenant en série le démodulateur de fréquence, un décodeur numérique et éventuellement, entre ces deux éléments, un filtre, caractérisé en ce que le circuit de décision comprend des moyens d'ouverture d'une fenêtre temporelle et de validation du signal d'amplitude maximale à l'intérieur de ladite fenêtre.

3. Dispositif selon la revendication 2, caractérisé en ce que le circuit de décision comprend une série de circuits à retard, recevant successivement la sortie du circuit de comparaison et dont les retards additionnés définissent la longueur de ladite fenêtre temporelle, un comparateur des entrées desdits circuits à retard, et un circuit de validation, commandé par la première valeur non nulle qui a déclenché l'ouverture de ladite fenêtre en vue de sélectionner en sortie du comparateur les deux informations de position temporelle et de polarité du clic de plus grande amplitude détecté à l'intérieur de cette fenêtre.

4. Dispositif selon la revendication 2, caractérisé en ce que le circuit de décision comprend un comparateur, qui reçoit d'une part la sortie du circuit de comparaison et d'autre part la sortie d'un premier registre de stockage de la valeur maximale parmi les valeurs non nulles de sortie dudit circuit de comparaison pour commander l'ouverture ou la fermeture d'un premier interrupteur de liaison entre la sortie du circuit de comparaison et l'entrée du registre de stockage de valeur maximale, et un compteur de repérage de la position dudit signal d'amplitude maximale, relié ou non à l'entrée d'un deuxième registre de stockage de la position temporelle associée à ladite valeur maximale selon la position d'un deuxième interrupteur également commandé par ledit comparateur, lesdites informations de position temporelle et de polarité étant présentes respectivement en sortie dudit deuxième registre et en sortie d'une circuit de détermination de signe prévu en sortie dudit premier registre.

5. Dispositif selon l'une des revendications 3 et 4, caractérisé en ce que le circuit de correction comprend une mémoire de valeurs à soustraire, ou à ajouter, et un sommateur précédé d'un circuit de réalignement temporel.

6. Dispositif selon l'une des revendications 3 et 4, caractérisé en ce qu'il est intégré au décodeur numérique.

7. Dispositif selon la revendication 6, dans lequel le décodeur numérique est un décodeur à un ou plusieurs seuils selon le nombre de niveaux du signal numérique reçu, caractérisé en ce que le circuit de correction comprend un registre de stockage desdites informations de position temporelle et de polarité, commandant deux circuits de réglage des seuils du décodeur numérique.

8. Dispositif selon la revendication 6, dans lequel le décodeur numérique est un décodeur dit de Viterbi équipé, en tête, de trois mémoires de réception en parallèle des signaux à décoder, caractérisé en ce qu'il comprend un circuit de modification d'adresses recevant les deux informations de position temporelle et de polarité délivrées par le circuit de décision et destiné à modifier la commande d'adressage desdites mémoires en réponse à ces deux informations, ces mémoires recevant d'une part, en vue de leur propre adressage, lesdits signaux à décoder et d'autre part lesdites informations de position temporelle et de polarité lorsqu'elles existent.

FIG.1a

FIG.1b

FIG.2

FIG.3

FIG. 4

FIG. 5

FIG. 6a

FIG. 6b

200 → [342a] → [343a] → 400

341a [                    ]

330   330

FIG. 7a

FIG. 7b

200 → [400]

341b [                    ]

342b

343b

330   330

400

200 →

[401c]   [402c]   [403c]

404c

330   330

FIG. 7c

Office européen
des brevets

RAPPORT DE RECHERCHE EUROPEENNE

Numero de la demande

EP 88 20 1510 .

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | RUNDFUNKTECHNISCHE MITTEILUNGEN, vol. 29, no. 5, septembre/octobre 1985, pages 229-246, Nordestedt, DE; C. DOSCH: "D- und D2-Mac/Paket - Die Mitglieder der Mac-Fernsehstandardfamilie mit geschlossener Basisbanddarstellung" * Page 239, colonne de gauche, ligne 43 - page 240, colonne de droite, ligne 3 * --- | 1 | H 04 N 7/08 |
| A | FR-A-2 349 907 (CLARION et al.) * Page 1, lignes 1-11; page 1, ligne 30 - page 2, ligne 2; page 3, ligne 19 - page 4, ligne 11 * --- | 1,2,5 | |
| A | INDEPENDENT BROADCASTING AUTHORITY, rapport no. 130/84, "Experimental & Development", 1985, Winchester, Hants, GB; B. BEECH et al.: "Threshold extension techniques" * Page 1, chapitre 1; page 9, colonne de gauche, ligne 7 - page 10, colonne de gauche, ligne 23 * ----- | 1 | DOMAINES TECHNIQUES RECHERCHES (Int. Cl.4) H 04 N 7 H 04 B 1 |

Le présent rapport a été établi pour toutes les revendications

| Lieu de la recherche | Date d'achèvement de la recherche | Examinateur |
|---|---|---|
| LA HAYE | 26-09-1988 | DUHR R.H.J.E. |